(19) Europäisches Patentamt
European Patent Office
Office européen des brevets

(11) **EP 2 590 845 B1**

(12) **EUROPÄISCHE PATENTSCHRIFT**

(45) Veröffentlichungstag und Bekanntmachung des Hinweises auf die Patenterteilung:
**08.05.2019   Patentblatt 2019/19**

(21) Anmeldenummer: **11719004.1**

(22) Anmeldetag: **11.05.2011**

(51) Int Cl.:
***B60T 8/172*** *(2006.01)*

(86) Internationale Anmeldenummer:
**PCT/EP2011/057606**

(87) Internationale Veröffentlichungsnummer:
**WO 2012/004029 (12.01.2012 Gazette 2012/02)**

(54) **VERFAHREN ZUR BESTIMMUNG EINER FAHRZEUGREFERENZGESCHWINDIGKEIT UND BREMSANLAGE**

METHOD FOR DETERMINING A VEHICLE REFERENCE SPEED AND BRAKE SYSTEM

PROCÉDÉ DE DÉTERMINATION D'UNE VITESSE DE RÉFÉRENCE DE VÉHICULE ET SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2010   DE 102010030984**

(43) Veröffentlichungstag der Anmeldung:
**15.05.2013   Patentblatt 2013/20**

(73) Patentinhaber: **Continental Teves AG & Co. OHG 60488 Frankfurt am Main (DE)**

(72) Erfinder:
• **ROLL, Georg**
  **60438 Frankfurt (DE)**
• **IHRIG, Hans-Georg**
  **64289 Darmstadt (DE)**
• **WETZEL, Dirk**
  **35625 Hüttenberg (DE)**

(56) Entgegenhaltungen:
**US-A1- 2006 055 234**

**Beschreibung**

Die Erfindung betrifft ein Verfahren zur Bestimmung einer Fahrzeugreferenzgeschwindigkeit gemäß Oberbegriff von Anspruch 1 sowie eine Bremsanlage gemäß Oberbegriff von Anspruch 10.

Antiblockierregelsysteme (ABS) mit elektronischer Regelung sind in vielfältiger Ausführung bekannt und auf dem Markt. Bei den allermeisten Systemen werden die für die Regelung benötigten Informationen durch Messung des Drehverhaltens der einzelnen Räder gewonnen, wobei durch logische Verknüpfung aller Raddrehsignale eine die Fahrzeuggeschwindigkeit näherungsweise wiedergebende Fahrzeugreferenzgeschwindigkeit ermittelt wird, die dann als Bezugsgröße zur Bestimmung des Radschlupfes und anderer Regelgrößen und schließlich zur Bemessung bzw. Regelung des Bremsdruckes in den Radbremsen herangezogen wird.

Ebenso ist es bekannt, siehe z.B. die DE 38 33 212 A1, bei der Bildung der Fahrzeugreferenzgeschwindigkeit deren Steigung zu begrenzen, um physikalisch unmögliche Fahrzeuggeschwindigkeitsänderungen nicht in die Referenzgrößenbildung eingehen zu lassen.

Das Motorrad hat sich im Laufe der letzten Jahrzehnte von einem einfach ausgestatteten Fortbewegungsmittel zu einem Freizeitgefährt entwickelt, bei dem auch vermehrt die Sicherheit des Fahrers in den Vordergrund gerückt wird. Ähnlich wie bei den Automobilen vor einigen Jahren werden zunehmend auch Motorräder mit Antiblockiersystemen (ABS) ausgerüstet. Aus der EP 0 548 985 B1 ist beispielsweise eine Blockierschutzvorrichtung für Motorräder bekannt. Ferner ist aus der DE 40 00 212 A1 ein Verfahren zum blockiergeschützten Bremsen eines Motorrades und zum Bestimmen des Haftbeiwertes bekannt.

Es ist die Aufgabe der Erfindung, ein Verfahren zur Bestimmung einer zuverlässigen Fahrzeugreferenzgeschwindigkeit für die Antiblockierregelung eines schlupfregelbaren Rades eines Kraftfahrzeugs bereitzustellen, welches auch in kostengünstigen Bremsanlagen oder in einem Fehlerfall der Bremsanlage durchführbar ist.

Diese Aufgabe wird erfindungsgemäß durch ein Verfahren gemäß Anspruch 1 gelöst.

Der Erfindung liegt der Gedanke zugrunde, dass zur Schlupfregelung des betrachteten Rades eine radindividuelle Fahrzeugreferenzgeschwindigkeit herangezogen wird, welche anhand der Radgeschwindigkeit nur dieses Rades bestimmt wird. Als Fahrzeugreferenzgeschwindigkeit wird ein erstes Radgeschwindigkeitssignal verwendet, welches durch eine Tiefpassfilterung der gemessenen Radgeschwindigkeit und eine Begrenzung der negativen Steigung des gefilterten Signals auf einen Gradientengrenzwert bestimmt wird.

Der Gradientengrenzwert wird hier als positiv angenommen und gibt somit den maximalen Betrag der negativen Steigung an.

Unter "Radgeschwindigkeit" sind all jene Größen zu verstehen, welche direkt mit der Radgeschwindigkeit in Zusammenhang stehen, also auch z.B. Radumlaufzeiten oder Raddrehzahlen.

Ein mit der Erfindung erzielter Vorteil liegt darin, dass eine zuverlässige Fahrzeugreferenzgeschwindigkeit für die Antiblockierregelung eines Rades nur anhand der Radgeschwindigkeit dieses Rades erhalten werden kann. Entsprechend kann die Erfindung in kostengünstigen Bremsanlagen, in denen ein Raddrehzahlsensor nur an dem schlupfregelbaren Rad vorhanden ist, eingesetzt werden. Ebenso kann die Erfindung in brake-by-wire Bremsanlagen, z.B. mit elektromechanischen Bremsen, als Notfallmaßnahme eingesetzt werden. Dort kann eine radindividuelle Antiblockierregelung durch eine radindividuelle Steuereinheit alleine anhand der einen zugehörigen Radgeschwindigkeit durchgeführt werden.

Um Störungen auf dem gemessenen Radgeschwindigkeitssignal und kurzzeitige Radgeschwindigkeitsänderungen nicht in die Fahrzeugreferenzgeschwindigkeit eingehen zu lassen, wird die gemessene Radgeschwindigkeit vorteilhafterweise stark gefiltert. Bevorzugt wird zur Filterung ein Tiefpassfilter erster Ordnung mit einer Zeitkonstante von ca. 80 bis ca. 100ms eingesetzt.

Gemäß einer Weiterbildung der Erfindung wird der Gradientengrenzwert zur Begrenzung des negativen Gradienten der Fahrzeugreferenzgeschwindigkeit zu Beginn jeder Schlupfregelung auf einen vorgegebenen Anfangswert gesetzt und dann in Abhängigkeit von dem Verlauf der Radgeschwindigkeit während der Antiblockierregelung ständig angepasst. Besonders bevorzugt wird während der Anpassung des Gradientengrenzwertes dieser vorgegebene Anfangswert nicht überschritten. Der Anfangswert für den Betrag der negativen Steigung beträgt besonders bevorzugt 1g (g: Erdbeschleunigung).

Bevorzugt wird zur Anpassung des Gradientengrenzwertes ein zweites Radgeschwindigkeitssignal gebildet, welches mit dem ersten Radgeschwindigkeitssignal zur Bestimmung eines Verzögerungswertes verglichen wird. In Abhängigkeit des bestimmten Verzögerungswerts wird dann ein angepasster Gradientengrenzwert bestimmt. Besonders bevorzugt wird der neue Gradientengrenzwert gleich dem bestimmten Verzögerungswert gesetzt.

Gemäß einer bevorzugten Ausführungsform der Erfindung ist das zweite Radgeschwindigkeitssignal durch das ungefilterte Signal der gemessenen Radgeschwindigkeit gegeben. Es wird so kein weiterer Filter o.ä. benötigt.

Gemäß einer anderen bevorzugten Ausführungsform der Erfindung wird das zweite Radgeschwindigkeitssignal durch eine Tiefpassfilterung der gemessenen Radgeschwindigkeit bestimmt. Dabei ist die Filterkonstante der Tiefpassfilterung des zweiten Radgeschwindigkeitssignals kleiner als die Filterkonstante der Tiefpassfilterung des ersten Radgeschwindigkeitssignals. Besonders bevorzugt beträgt die Filterkonstante für das zweite Radgeschwindigkeitssignal ca. 30 bis 40ms. Durch die Berücksichtigung eines schwach gefilterten Radgeschwindigkeitssignals als zweites Radgeschwindigkeitssignal werden willkürliche Einflüsse auf die Bestimmung des Verzögerungswertes durch Schwingungen in der Radgeschwindigkeit unterbunden.

Der Verzögerungswert stellt bevorzugt eine mittlere Fahrzeugverzögerung dar und wird daher aus einer Zeitdauer und einer zugehörigen Geschwindigkeitsdifferenz des ersten Radgeschwindigkeitssignals, d.h. der Fahrzeugreferenzgeschwindigkeit, bestimmt.

In einer bevorzugten Ausführungsform wird die Zeitdauer durch den zeitlichen Abstand zwischen einem ersten und einem zweiten Arbeitspunkt und die zugehörige Geschwindigkeitsdifferenz als die Geschwindigkeitsänderung des ersten Radgeschwindigkeitssignals zwischen dem ersten und dem zweite Arbeitspunkt bestimmt. Der erste Arbeitspunkt entspricht dabei dem Punkt des Erkennens einer Radinstabilität des Rades. Eine Radinstabilität des Rades wird besonders bevorzugt erkannt, wenn der Schlupf des Rades eine Schlupfschwelle überschreitet oder wenn durch die Antiblockierregelung ein Druckabbau an dem Rad durchgeführt wird. Der zweite Arbeitspunkt entspricht besonders bevorzugt einem Punkt, an welchem die Radinstabilität im Wesentlichen ausgeregelt ist. Der anhand dieser Arbeitspunkte berechnete Verzögerungswert entspricht also einer mittleren Fahrzeugverzögerung während der Ausregelung der Instabilität des Rades. Der zugehörige angepasste Gradientengrenzwert ist vorteilhafterweise kleiner als der vorherige Gradientengrenzwert.

Gemäß einer bevorzugten Ausführungsform des erfindungsgemäßen Verfahrens wird der dem ersten Arbeitspunkt entsprechende zweite Arbeitspunkt erkannt, wenn das zweite Radgeschwindigkeitssignal nach der Ausregelung der Radinstabilität abfällt, so dass das zweite Radgeschwindigkeitssignal das erste Radgeschwindigkeitssignal schneidet. Besonders bevorzugt ist dieser Schnittpunkt von zweitem und erstem Radgeschwindigkeitssignal ein Auslösekriterium für einen Druckaufbau durch die Antiblockierregelung.

In Fällen, bei welchen es zu keinem entsprechenden Schnittpunkt des ersten und zweiten Radgeschwindigkeitssignals wie oben beschrieben kommt, wird der dem ersten Arbeitspunkt zugehörige zweite Arbeitspunkt bevorzugt dann erkannt, wenn das erste und das zweite Radgeschwindigkeitssignal sich für eine vorgegebene Zeitdauer maximal um einen vorgegebenen Geschwindigkeitsbetrag unterscheiden. Besonders bevorzugt beträgt die vorgegebene Zeitdauer ca. 40 bis 60ms. Der vorgegebene maximale Geschwindigkeitsbetrag beträgt vorteilhafterweise ca. 3km/h.

Um ein Unterbremsen des Fahrzeugs zu verhindern, wird bevorzugt der Gradientengrenzwert zur Begrenzung des ersten Radgeschwindigkeitssignals während einer Druckaufbauphase der Antiblockierregelung des Rades erhöht. Der Gradientengrenzwert wird hierzu um einen Betrag erhöht, der proportional zu der Druckerhöhung an dem Rad in der Druckaufbauphase ist.

Bevorzugt wird die Antiblockierregelung in einem digitalen Antiblockierregler durchgeführt, d.h. der Regler arbeitet zeitdiskret und verarbeitet die entsprechenden Größen in festen, gleichmäßigen Zeitabständen (Loopzeit).

Ebenso ist es bevorzugt, dass das erste Radgeschwindigkeitssignal, das zweite Radgeschwindigkeitssignal und der Gradientengrenzwert nach jeder Loopzeit des Reglers neu bestimmt werden.

Gemäß einer Weiterbildung der Erfindung wird ein Schneiden des zweiten und ersten Radgeschwindigkeitssignals daran erkannt, dass während einer Loopzeit das erste und das zweite Radgeschwindigkeitssignal gleich sind oder dass im Vergleich von aktueller Loopzeit zu vorheriger Loopzeit ein Wechsel stattgefunden hat, welches der beiden Signale größer als das andere Signal ist.

Bevorzugt wird das erfindungsgemäße Verfahren in einer Bremsanlage eines motorisierten Einspurfahrzeugs durchgeführt, wobei in diesem Fall der Gradientengrenzwert zur Begrenzung des ersten Radgeschwindigkeitssignals des schlupfgeregelten Rades, z.B. Vorderrades, in Abhängigkeit eines Signals eines Bremslichtschalters für das andere Rad, z.B. Hinterrad, angepasst wird. Besonders bevorzugt wird der Gradientengrenzwert um einen vorgegebenen Betrag erhöht, wenn während einer Vorderrad-Antiblockierregelung das Hinterrad-Bremslichtschaltersignal von "inaktiv" auf "aktiv" wechselt und um einen vorgegebenen Betrag erniedrigt, wenn während einer Vorderrad-Antiblockierregelung das Hinterrad-Bremslichtschaltersignal von "aktiv" auf "inaktiv" wechselt.

Bevorzugt wird ein erfindungsgemäßes Verfahren in einer Bremsanlage eines Einspurfahrzeugs durchgeführt, welches derart ausgelegt ist, dass nur an einem der beiden Räder, insbesondere dem Vorderrad, eine Schlupfregelung durchführbar ist, und bei welchem nur an dem schlupfregelbaren Rad einen Sensor zur Messung der Radgeschwindigkeit angeordnet ist.

Ebenso ist es bevorzugt, dass ein erfindungsgemäßes Verfahren in einer Bremsanlage eines Einspurfahrzeugs durchgeführt wird, welches derart ausgelegt ist, dass an beiden Rädern eine Schlupfregelung durchführbar ist, wobei an beiden Rädern jeweils ein Sensor zur Messung der Radgeschwindigkeit angeordnet ist. Vorteilhafterweise wird in bestimmten Situationen für jedes der beiden Räder eine radindividuelle Fahrzeugreferenzgeschwindigkeit bestimmt und an jedem der beiden Räder in Abhängigkeit der jeweiligen radindividuellen Fahrzeugreferenzgeschwindigkeit eine Schlupfregelung durchführt.

Weiterhin wird ein erfindungsgemäßes Verfahren bevorzugt in einer brake-by-wire Bremsanlage durchgeführt, in welcher, z.B. in einem Notfallbetriebsmodus, durch radindividuelle Bremssteuergeräte, welche z.B. jedem Rad zugeordnet sind, eine Schlupfregelung des jeweils zugeordneten Rades in Abhängigkeit der entsprechenden radindividuellen Fahrzeugreferenzgeschwindigkeit durchführt wird. Besonders bevorzugt umfasst die brake-by-wire Bremsanlage elektromechanische Bremsen.

Die Erfindung betrifft auch eine Bremsanlage, in welcher ein vorstehend beschriebenes Verfahren durchgeführt wird.

Weitere bevorzugte Ausführungsformen der Erfindung ergeben sich aus den Unteransprüchen und der nachfolgenden Beschreibung anhand von Figuren.

Es zeigen schematisch

Fig. 1 beispielsgemäße Signalverläufe während einer ABS-Regelung auf homogener Fahrbahn,

Fig. 2 beispielsgemäße Signalverläufe während einer ABS-Regelung auf einer Fahrbahn mit einer sprungartigen Reibwertverringerung,

Fig. 3 beispielsgemäße Signalverläufe während einer ABS-Regelung auf einer Fahrbahn mit einer sprungartigen Reibwerterhöhung,

Fig. 4 beispielsgemäße Signalverläufe vom Beginn einer ABS-Regelung auf einer Fahrbahn mit geringem bzw. hohem Reibwert,

Fig. 5 beispielsgemäße Signalverläufe vom Beginn einer ABS-Regelung für zwei unterschiedliche Fahrzeugreferenzgeschwindigkeiten,

Fig. 6 beispielsgemäße Signalverläufe vom Beginn einer ABS-Regelung mit einem weiteren Hilfssignal, und

Fig. 7 ein Kraftrad geeignet zur Durchführung eines erfindungsgemäßen Verfahrens.

Das Prinzip einer Antiblockier-Regelung (ABS-Regelung) sieht vor, den Bremsdruck eines geregelten Rades abzubauen, wenn eine Radüberbremsung bzw. Radinstabilität auftritt, wobei diese über einen hohen Bremsschlupf und eine hohe Radverzögerung erkannt wird. Nach einem geeigneten Abbau des Radbremsdrucks und der daraus resultierenden Beschleunigung des Rades in den stabilen Schlupfbereich wird der Bremsdruck des Rades wieder schrittweise erhöht, bis es zu einer erneuten sichtbaren Radinstabilität kommt. Dieser zyklische Druckauf- und Druckabbau wird wiederholt, bis das Fahrzeug zum Stillstand kommt oder der Fahrer den Bremsdruck unter das Blockierdruckniveau absenkt. Das Prinzip von Druckabbau und Druckaufbau zur Regelung des Radschlupfs ist an sich bekannt.

Um auch bei schwankenden Fahrbahnreibwerten optimale Raddruckwerte zu finden, werden Radschlupf und Radbeschleunigung sorgfältig analysiert, damit die Blockierneigung des Rades sicher erkannt werden kann. Der Radschlupf wird dabei anhand der sogenannten Fahrzeugreferenzgeschwindigkeit (VREF) berechnet, da die tatsächliche Fahrzeuggeschwindigkeit nicht ohne hohen Aufwand messbar ist und daher für den Bremsenregler im Allgemeinen unbekannt ist. Zur genauen Beurteilung der Radstabilität sollte die herangezogene Fahrzeugreferenzgeschwindigkeit VREF daher möglichst gut an die tatsächliche Fahrzeuggeschwindigkeit angenähert werden. Ist die Fahrzeugreferenzgeschwindigkeit VREF zu hoch, so wird ein zu großer Schlupf angenommen und unter Umständen vorzeitig Druck abgebaut, was zur Unterbremsung führen kann. Bei zu gering angenommener Fahrzeugreferenzgeschwindigkeit VREF täuscht der zu gering berechnete Schlupf eine zu hohe Radstabilität vor, was zur Radüberbremsung bis hin zur Instabilität führen kann.

Es wird daher ein Verfahren zur Bildung einer zuverlässigen Fahrzeugreferenzgeschwindigkeit anhand nur eines einzigen Raddrehgeschwindigkeitssignals vorgeschlagen.

Beispielsgemäß wird das Verfahren zur Berechnung bzw. Schätzung einer Fahrzeugreferenzgeschwindigkeit in einem elektronischen Regler für ein 1-kanaliges Antiblockiersystem für motorisierte Einspurfahrzeuge, z.B. Motorräder und Motorroller, durchgeführt. Mit dem einen Kanal wird aufgrund der hydraulischen und elektrischen Konfiguration des Bremssystems nur der Bremsdruck des Vorderrades VR geregelt. Des Weiteren wird, z.B. aus Kostengründen, auch nur die Raddrehzahl des Vorderrades VR sensorisch erfasst. Die Berechnung bzw. Schätzung der Fahrzeugreferenzgeschwindigkeit VREF für die ABS-Regelung des Vorderrades VR erfolgt deshalb nur auf der Basis der Drehzahlinformation des Vorderrades VR.

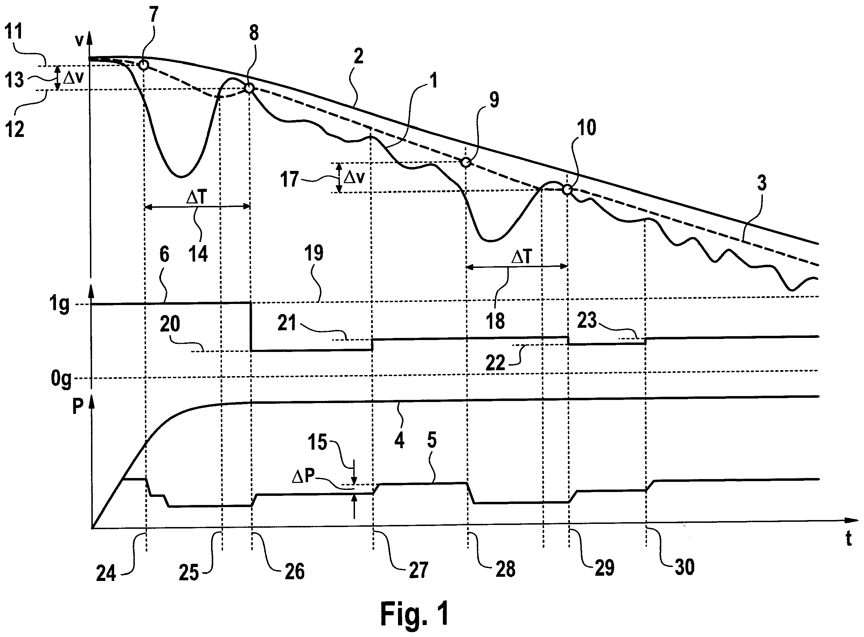

Fig. 1 zeigt schematisch beispielsgemäße Signalverläufe während einer ABS-Regelung auf homogener Fahrbahn. Anhand der Signalverläufe wird im Folgenden ein beispielsgemäßes Verfahren erläutert. Das zeitliche Verhalten der Radgeschwindigkeit v des Vorderrades VR wird durch den Verlauf 1 dargestellt, Verlauf 2 gibt die (tatsächliche) Fahrzeuggeschwindigkeit an. Linie 3 gibt eine geschätzte Fahrzeugreferenzgeschwindigkeit VREF wieder. Verlauf 4 gibt den durch den Fahrer eingesteuerten Bremsdruck (Vordruck) und Verlauf 5 den Radbremsdruck P am geregelten Vorderrad VR wieder.

Beispielsgemäß wird die gemessene Radgeschwindigkeit 1 des Vorderrades VR relativ stark gefiltert, beispielsweise mit einem Tiefpassfilter erster Ordnung und einer Zeitkonstanten von ca. 80 bis 100ms. Das Ergebnissignal $v_{filt}$ wird als erste Annäherung an die Fahrzeuggeschwindigkeit betrachtet:

$$v_{filt\_n} = ((k-1) * T * v_{filt\_n-1} + T * v_n) / (k * T)$$

oder nach Kürzung der Loopzeit T

$$v_{filt\_n} = ((k-1) * v_{filt\_n-1} + v_n) / k$$

mit

$v_{filt\_n}$: gefilterte Radgeschwindigkeit in der aktuellen Regelungsloop,
$v_{filt\_n-1}$: gefilterte Radgeschwindigkeit in der vorherigen Regelungsloop,
$v_n$: Radgeschwindigkeit in der aktuellen Regelungsloop,
T: Loopzeit des, insbesondere digitalen, ABS-Reglers (beispielsweise 10ms), und
k*T: Zeitkonstante des Tiefpassfilters (beispielsweise 80ms, d.h. k=8 für T=10ms).

Wenn der Fahrer während einer Bremsung einen zu hohen Bremsdruck 4 vorgibt, so wird die ABS-Regelung durch entsprechende Aktivierung von Regelventilen einen Radbremsdruck 5 einstellen, der ein Blockieren des Rades VR verhindert. Die zyklische Modulation des Raddrucks 5 führt aus Sicherheitsgründen jedoch regelmäßig zum kurzzeitigen Überbremsen des Rades mit einer Instabilität für einen gewissen Zeitraum ΔT (z.B. Zeitintervall zwischen den Zeitpunkten 24 und 26 oder 28 und 29).

Damit im Falle einer solchen Radinstabilität das gefilterte Signal $v_{filt}$ der steil abfallenden Radgeschwindigkeit 1 nicht zu stark folgt (dies kann über ein Filter nicht vermieden werden), wird der negative Gradient des gefilterten Signals beispielsgemäß auf einen Maximalwert $\Delta v_{max}$ begrenzt, welcher während der ABS-Bremsung laufend angepasst wird. Das gefilterte und gradientenlimitierte Signal wird mit $v_{filt\_gradlim}$ bezeichnet. In der n-ten Regelungsloop wird somit die gradientenlimitierte gefilterte Geschwindigkeit $v_{filt\_graclim\_n}$ nach folgender Gleichung als das Maximum der gefilterten Radgeschwindigkeit $v_{filt\_n}$ und der Differenz von $v_{filt\_n-1}$ und $\Delta v_{max\_n}$ bestimmt:

$$v_{filt\_gradlim\_n} = Max(v_{filt\_n}, (v_{filt\_n-1} - \Delta v_{max\_n}))$$

Ist also das gefilterte Signal $v_{filt\_n}$ kleiner als das gefilterte Signal der vorherigen Loop $v_{filt\_n-1}$ reduziert um den Gradienten $\Delta v_{max\_n}$, so wird $v_{filt\_gradlim\_n}$ auf den Wert $v_{filt\_n-1}- \Delta v_{max}$ gesetzt. Hierdurch wird ein stabiles Referenzsignal $v_{filt\_gradlim}$ erhalten, welches sich einerseits direkt an der einen verfügbaren Radgeschwindigkeit 1 orientiert, andererseits aber nicht dem hohen negativen Gradienten folgt, der zwar am Rad VR aber nicht als Fahrzeugverzögerung auftreten kann. In Fig. 1 ist die nach obigem Berechnungsverfahren bestimmte Fahrzeugreferenzgeschwindigkeit VREF bzw. $v_{filt\_gradlim}$ als gestrichelte Signal 3 dargestellt, das etwas unterhalb der tatsächlichen Fahrzeuggeschwindigkeit 2 liegt.

Damit das Signal $v_{filt\_graclim\_n}$ als Referenzgeschwindigkeit VREF verlässlich ist, werden beispielsgemäß die Limitierungsgradienten $\Delta v_{max\_n}$/T in jeder Regelungsloop der Länge T bzw. die maximale Geschwindigkeitsänderung $\Delta v_{max\_n}$ pro Loop geeignet berechnet. Dabei wird die maximale Geschwindigkeitsänderung $\Delta v_{max\_n}$ jeweils auf einen Wert gesetzt, der geringfügig oberhalb der tatsächlichen Fahrzeuggeschwindigkeitsabnahme $\Delta v_{Fzg\_n}$ pro Loop aufgrund der aktuellen Fahrzeugverzögerung liegt, d.h. es soll gelten:

$$\Delta v_{max\_n} > \Delta v_{Fzg\_n}$$

Ein beispielsgemäßer Verlauf des Limitierungsgradient $\Delta v_{max\_n}$/T ist in Fig. 1 als Signal 6 dargestellt.

Die Berechnung der Geschwindigkeitsänderungen $\Delta v_{max\_n}$ geschieht dazu beispielsgemäß folgendermaßen. Außerhalb bzw. zu Beginn der ABS-Regelung wird davon ausgegangen, dass der maximal denkbare Reibwert, also der Wert 1, vorliegt (Niveau 19 des Signals 6), sodass das Fahrzeug bei Vollbremsung etwa mit der Erdbeschleunigung 1g verzögern kann. Diese Annahme ist notwendig, da es noch keine hinreichenden Messwerte für eine verlässliche Schätzung gibt und sicherheitshalber von der physikalisch maximal denkbaren Fahrzeugverzögerung ausgegangen werden muss, um ein Unterbremsen des Fahrzeugs aufgrund einer zu hoch geschätzten Referenzgeschwindigkeit VREF zu vermeiden. Entsprechend wird die maximale Geschwindigkeitsänderung gemäß

$$\Delta v_{max\_n} = 1g * T$$

(mit T: Regelungs-Loopzeit) berechnet.

In der ersten Phase der Radinstabilität vom Zeitpunkt 24 bis 26 bedeutet dies, dass die geschätzte Fahrzeugreferenzgeschwindigkeit 3 der Radgeschwindigkeit 1 mit einer maximalen Verzögerung von 1g in den Schlupf folgt. Durch eine geeignete Modulation des Raddrucks 5 wird das Rad VR wieder in Richtung der Fahrzeuggeschwindigkeit 2 beschleunigt. Da das Signal 3 zu tief geschätzt wurde, übersteigt die Radgeschwindigkeit 1 das Signal 3 zum Zeitpunkt 25 und zieht es über die oben genannte Filterfunktion bis zum Zeitpunkt 26 wieder hoch, sodass dann ein erneuter Kreuzungspunkt 8 der Signale 1 und 3 auftritt.

Beispielsgemäß wird nun ein neuer Wert 20 für den Limitierungsgradienten $\Delta v_{max\_n}/T$ (Signal 6) berechnet, da die Geschwindigkeitsdifferenz $\Delta v$ (Wert 13) dividiert durch die Zeit $\Delta T$ (Wert 14) ein gutes Maß für die mittlere Fahrzeugverzögerung im Zeitintervall $\Delta T$ darstellt. Dazu wird $\Delta v$ berechnet, indem der Wert 11 der Fahrzeugreferenzgeschwindigkeit VREF (Signal 3) gespeichert wird, wenn eine Radinstabilität (Arbeitspunkt 7) erkannt wurde. Von diesem Wert 11 wird der Wert 12 der Fahrzeugreferenzgeschwindigkeit VREF im Signal-Kreuzungspunkt 8 subtrahiert, und es ergibt sich der Wert 13 für $\Delta v$. Zur Berechnung von $\Delta T$ wird vom Zeitpunkt 26 des Punkts 8 der Zeitpunkt 24 des Punkts 7 subtrahiert. Der Quotient aus $\Delta v$ und $\Delta T$ ist die mittlere Fahrzeugverzögerung im Intervall $\Delta T$:

$$a_{Fzg} = \Delta v / \Delta T$$

Daraus ergibt sich der aktuelle Limitierungsgradient

$$\Delta v_{max\_n}/T \text{ gemäß}$$

$$\Delta v_{max\_n}/T = a_{Fzg}$$

Der so bestimmte neue Verzögerungswert 20 ist kleiner als der vorherige Wert 19, da während des Intervalls 14 der Radinstabilität keine Verzögerungszunahme aufgrund der Bremssituation des betrachteten Rades VR stattfindet.

Um die Fahrzeugreferenzgeschwindigkeit VREF nicht auf einem zu hohen Niveau festzuhalten, wird der Verzögerungswert in der Druckaufbauphase beispielsgemäß nochmals angepasst. Eine erhöhte Fahrzeugverzögerung kann nur dann erwartet werden, wenn der Radbremsdruck 5 erhöht wurde (Zeitpunkte 26 und 27 sowie 29 und 30 in Fig. 1). Deshalb wird der Limitierungsgradient 6 beispielsgemäß jeweils um einen Betrag $\Delta a_{Fzg}$ erhöht, welcher sich proportional aus der entsprechenden Druckerhöhung $\Delta P$ (z.B. Wert 15 im Zeitpunkt 27) errechnet:

$$\Delta v_{max\_n}/T = \Delta v_{max\_n-1}/T + \Delta a_{Fzg}$$

mit $\Delta a_{Fzg} = K*\Delta P$

Der Faktor K ergibt sich aus der Wirkung der Bremse und wird als bekannt angenommen. Beispielsweise erhöhe sich die Verzögerung eines Motorrads um 0.6m/s$^2$, wenn der Vorderraddruck um 3bar ansteigt. Hierfür ergibt sich der Faktor K dann gemäß

$$K = \Delta a_{Fzg}/\Delta P = 0.6m/s^2 / 3bar = 0.2 \ m/s^2 / bar$$

Der Wert des Faktors K kann mit der Beladung des Fahrzeugs und der Qualität der Bremse variieren, daher ist es vorteilhaft, den Wert des Faktors anhand von weiteren Informationen (Beladungszustand des Einspurfahrzeugs, Zustand der Bremsscheiben etc.) adaptiv zu wählen.

Falls in der Bremsanlage kein Bremsdrucksensor zur Bestimmung der Druckerhöhung $\Delta P$ vorhanden ist, wird

der Wert ∆P beispielsgemäß über die Ventilaktivitäten geschätzt.

Im Beispiel der Fig. 1 wird im Zeitintervall 18 eine weitere Radinstabilität ausgeregelt, sodass eine analoge Vorgehensweise der Berechnung des Limitierungsgradienten auf der Basis der Arbeitspunkte 9 und 10 erfolgt, wie sie anhand der Arbeitspunkte 7 und 8 oben beschrieben wurde. Der Limitierungsgradient 6 wird zum Zeitpunkt 29 von dem höheren Wert 21 auf den kleineren Wert 22 reduziert und im Zeitpunkt 30 aufgrund eines erneuten Druckaufbaus wieder auf den Wert 23 erhöht.

Das beispielsgemäße Verfahren sieht also vor, in den Instabilitätsphase des Rades VR, in denen ein ABS-Druckabbau erfolgt, jeweils einen verlässlichen neuen Wert für den VREF-Limitierungsgradient zu bestimmen und diesen bei jedem erneuten Aufbau des Raddrucks 5 geringfügig zu erhöhen.

Grundsätzlich sollte der Limitierungsgradient 6 eher zu groß als zu klein bestimmt werden, was auch aus dem Beispiel in Fig. 1 ersichtlich wird. Dadurch wird ein Unterbremsen des Fahrzeugs sicher vermieden. Da die ABS-Regelung nicht nur den Radschlupf sondern auch die Radverzögerung bewertet, kann ein Überbremsen aus folgendem Grund vermieden werden. Wenn der reale Schlupf des gebremsten Rad VR zu groß wird, geht die Haftreibung zwischen Reifen und Fahrbahn in Gleitreibung über. Daher ergibt sich regelungstechnisch gesehen ein Mitkopplungseffekt (Selbstverstärkungseffekt) bei der Blockierneigung. Dieser Effekt führt zu einem sehr abrupten Verzögern des Rades VR. Wenn also die Radverzögerung zusätzlich bewertet wird, führt das beispielsgemäße Verfahren der VREF-Schätzung immer zu einem ausreichend guten Erkennen des optimalen Bremspunktes, bei dem der Raddruck dann wieder zu reduzieren ist. Zusätzlich hilfreich ist die Tatsache, dass Krafträder ohnehin nur auf Böden gebremst werden können, auf denen auch ein sicherer Fahrbetrieb gewährleistet ist. Damit entfallen extrem niedrige Reibwerte, wie sie auf Eis oder rutschigem Schnee auftreten, und es ist sichergestellt, dass keine extremen Effekte möglich sind, wie sie teilweise beim PKW auftreten können, wie beispielsweise eine zumindest temporäre Fahrzeugbeschleunigung während einer Bremsung bergab auf sehr glattem Untergrund.

Oftmals umfassen Krafträder eine von der Vorderradbremse unabhängige Hinterradbremse, deren Bremswirkung einen Einfluss auf die Bremsverzögerung hat, z.B. wenn der Fahrer während einer ABS-Regelung des Vorderrades den Bremsdruck am Hinterrad variiert. Gemäß einem Ausführungsbeispiel der Erfindung wird daher zumindest ein Bremslichtschalter (HR-BLS-Signal) des Hinterradkreises als Indiz für eine Hinterradbremsung in das genannte Verfahren einbezogen. Z.B. wird beim Wechsel des HR-BLS-Signals von "inaktiv" auf "aktiv" während einer Vorderrad-ABS-Regelung der Limitierungsgradient $Av_{max\_n}/T$ für die Fahrzeugreferenzgeschwindigkeit um einen prozentualen Wert erhöht bzw. beim Wechsel von "aktiv" auf "inaktiv" um einen prozentualen Wert reduziert.

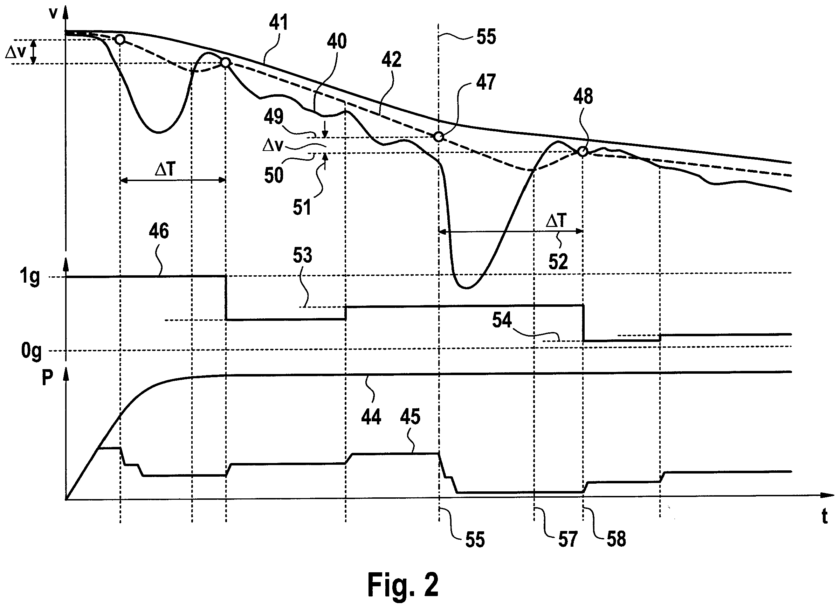

Fig. 2 zeigt schematisch beispielsgemäße Signalverläufe für eine Bremsung auf einem Untergrund, dessen Reibwert während der ABS-Regelung zum Zeitpunkt 55 sprungartig abnimmt. Das zeitliche Verhalten der Radgeschwindigkeit des Vorderrades VR wird durch den Verlauf 40 dargestellt, Verlauf 41 gibt die Fahrzeuggeschwindigkeit an. Linie 42 gibt die geschätzte Fahrzeugreferenzgeschwindigkeit VREF wieder. Verlauf 44 gibt den durch den Fahrer eingesteuerten Bremsdruck (Vordruck) und Verlauf 45 den Radbremsdruck am geregelten Vorderrad VR wieder. Signal 46 gibt den Limitierungsgradienten $\Delta v_{max\_n}/T$ wieder.

Infolge des Reibwertsprungs stellt sich ab dem Zeitpunkt 55 eine starke Radblockierneigung ein, welche an dem tiefen Schlupfeinlauf der Radgeschwindigkeit 40 erkennbar ist. Um diesen auszuregeln, wird der Raddruck 45 gegenüber dem zu hohen vom Fahrer aufgebrachten Vordruck 44 im Zeitintervall 52 deutlich reduziert. Da der VREF-Limitierungsgradient 46 zuvor auf einem hohen Wert 53 lag, läuft das Fahrzeugreferenzgeschwindigkeitssignal 42 zwischen den Zeitpunkten 55 und 57 zu steil in den Schlupf und entfernt sich dadurch deutlich von der tatsächlichen Fahrzeuggeschwindigkeit 41. Durch die Beschleunigung des Rades VR im Zeitintervall 57 bis 58 wird die Fahrzeugreferenzgeschwindigkeit aber wieder korrigiert. Im Schnittpunkt 48 der Fahrzeugreferenzgeschwindigkeit 42 mit der Radgeschwindigkeit 40 wird für den Limitierungsgradienten 46 gemäß dem oben beschriebenen Verfahren dann wieder der kleinere Wert 54 ermittelt, da die Fahrzeugverzögerung im relativ langen Zeitintervall 52 nur gering war und daher nur der kleine Abbau 51 in der Fahrzeuggeschwindigkeit (∆v) erreicht wurde. Dies ist die Differenz der Geschwindigkeiten 49 und 50 in den Arbeitspunkten 47 und 48. Der kleine Wert 54 für das Signal 46 resultiert also aus dem kleinen Quotienten ∆v/∆T (gemäß obiger Formeln $\Delta v_{max\_n}/T = a_{Fzg} = \Delta v/\Delta T$).

Das in Fig. 2 dargestellte Beispiel illustriert, dass das beispielsgemäße Verfahren auch für Reibwertübergänge von hohen zu kleineren Werten schnell zuverlässige Maximalwerte für den VREF-Gradienten ermittelt. Nach dem Zeitpunkt 58 sorgt dies dafür, dass die Fahrzeugreferenzgeschwindigkeit 42 recht flach abfällt, also auf hohem Niveau gehalten wird, was angesichts des geringen Fahrbahnreibwerts vorteilhaft ist.

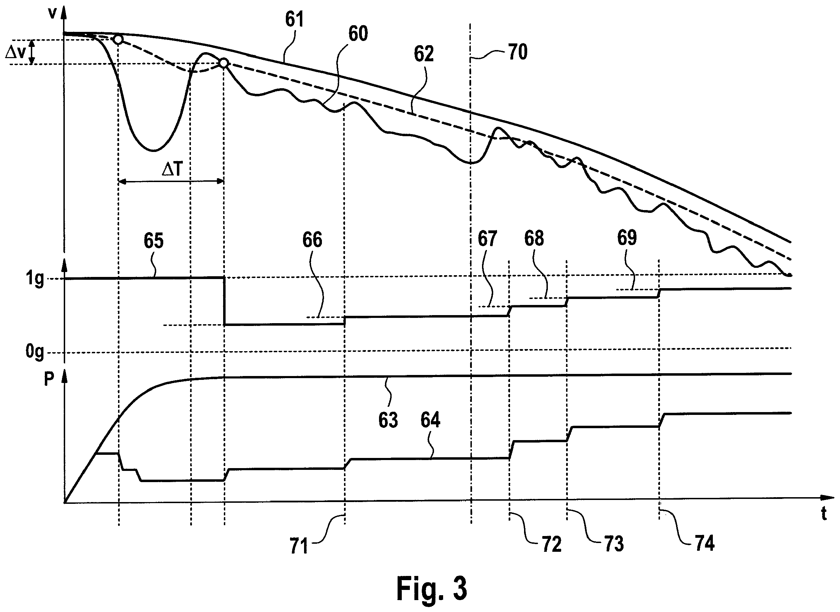

Fig. 3 zeigt schematisch beispielsgemäße Signalverläufe für eine Bremsung auf einem Untergrund, dessen Reibwert während der ABS-Regelung zum Zeitpunkt 70 sprungartig zunimmt. Das zeitliche Verhalten der Radgeschwindigkeit des Vorderrades VR wird durch den Verlauf 60 dargestellt, Verlauf 61 gibt die Fahrzeuggeschwindigkeit an. Linie 62 gibt die geschätzte Fahrzeugreferenzgeschwindigkeit VREF wieder. Verlauf 63 gibt den durch den Fahrer eingesteuerten Bremsdruck (Vordruck) und Verlauf 64 den Radbremsdruck am geregelten Vorderrad VR wieder. Signal 65 gibt den Limitierungsgradienten $\Delta v_{max\_n}/T$ wieder.

Nach dem Reibwertsprung nimmt die Blockierneigung des ABSgeregelten Rades VR deutlich ab, was an der stabil verlaufenden Radgeschwindigkeit 60 erkennbar ist. Entsprechend wird das Niveau des Raddrucks 64 dem vom Fahrer angeforderten Vordruck 63 schrittweise in den Zeitpunkten 72, 73 und 74 angenähert. Die Fahrzeugverzögerung nimmt dadurch zu und die tatsächliche Fahrzeuggeschwindigkeit 61 geht stärker gegen Null. Durch das beispielsgemäße Verfahren wird mit jedem Aufbau des Raddrucks $\Delta P$ auch der VREF-Limitierungsgradient 65 schrittweise auf die Werte 67, 68 und 69 erhöht, sodass die Fahrzeugreferenzgeschwindigkeit 62 der Radgeschwindigkeit 60 jeweils steiler folgt. Somit ist das beispielsgemäße Verfahren auch geeignet, eine sinnvolle Fahrzeugreferenzgeschwindigkeitsschätzung bei ansteigenden Fahrbahnreibwerten zu gewährleisten.

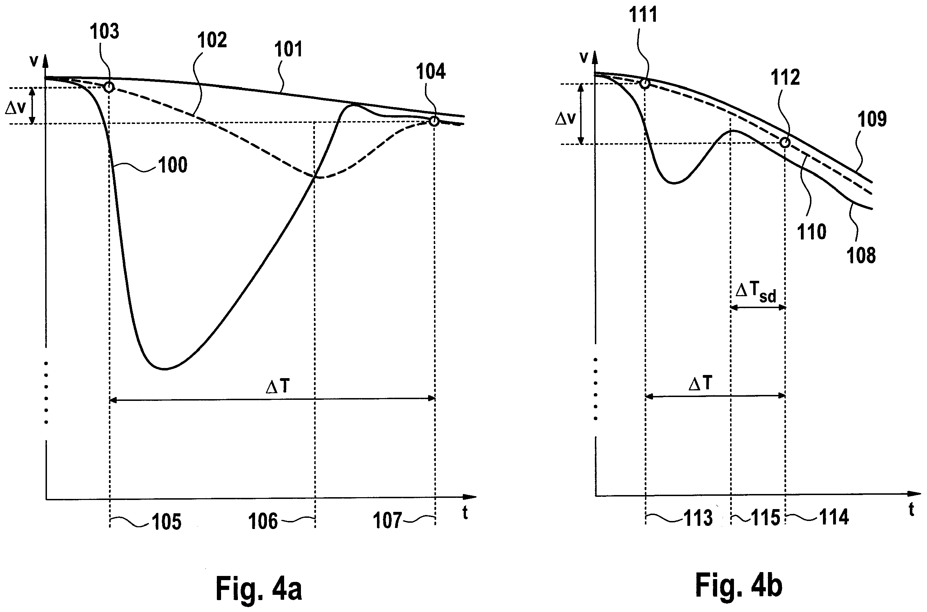

Fig. 4 zeigt schematisch zwei weitere Beispiele zur Berechnung eines VREF-Limitierungsgradienten während einer Radinstabilität.

In Fig. 4a sind schematisch beispielsgemäße Signalverläufe für eine Bremsung auf geringem Reibwert dargestellt. Das zeitliche Verhalten der Radgeschwindigkeit des Vorderrades VR wird durch den Verlauf 100 dargestellt, Verlauf 101 gibt die Fahrzeuggeschwindigkeit an. Linie 102 gibt die geschätzte Fahrzeugreferenzgeschwindigkeit VREF wieder. Ähnlich, wie anhand des in Fig. 2 dargestellten Beispiels erläutert, läuft die Fahrzeugreferenzgeschwindigkeit 102 zunächst viel zu steil in den Schlupf und entfernt sich daher deutlich von der tatsächlichen Fahrzeuggeschwindigkeit 101. Nach dem Zeitpunkt 106 wird die Fahrzeugreferenzgeschwindigkeit 102 mit Hilfe der Filterfunktion wieder durch die Radgeschwindigkeit 100 angehoben. Nach dem Kreuzungspunkt im Zeitpunkt 106 gibt es zum Zeitpunkt 107 eine weitere Kreuzung der Signale im Arbeitspunkt 104. Hier wird also mit Hilfe des Quotienten $\Delta v/\Delta T$ beispielsgemäß ein neuer VREF-Limitierungsgradient gebildet.

In derartigen Fällen muss - vor allem aus Gründen einer stabilen ABS-Regelung - sichergestellt werden, dass der Druck am geregelten Rad VR zumindest so stark abgebaut wird, dass die Radgeschwindigkeit 100 wieder an die Fahrzeuggeschwindigkeit 101 heranläuft. Bei einem zu frühen Druckaufbau (also vor dem Zeitpunkt 106) würde das Rad VR im Schlupf gehalten, sodass eine Instabilität auftreten könnte. Dies kann durch eine geeignete Auslegung der ABS-Regelstrategie vermieden werden, so dass das beispielsgemäße Verfahren zur Bestimmung der Fahrzeugreferenzgeschwindigkeit VREF auch in diesen Fällen zuverlässige Ergebnisse liefert. Ebenfalls könnte eine Verringerung des Fahrbahnreibwertes in der Nähe des Zeitpunkts 106 dazu führen, dass die Radgeschwindigkeit 100 nicht an die Fahrzeuggeschwindigkeit 101 heranläuft. In jedem Fall wird aber die ABS-Regelung durch geeigneten Druckabbau dafür sorgen, dass solche Situationen zumindest nicht dauerhaft eintreten.

In Fig. 4b sind schematisch beispielsgemäße Signalverläufe für eine Bremsung auf einer Hochreibwertfahrbahn dargestellt. Das zeitliche Verhalten der Radgeschwindigkeit des Vorderrades VR wird durch den Verlauf 108 dargestellt, Verlauf 109 gibt die Fahrzeuggeschwindigkeit an. Linie 110 gibt die geschätzte Fahrzeugreferenzgeschwindigkeit VREF wieder. Da das Fahrzeug bereits im ersten Zeitintervall 113 bis 114 der ABS-Regelung sehr stark verzögert, steigt die Radgeschwindigkeit 108 nicht über die Fahrzeugreferenzgeschwindigkeit 110 an. Es gibt daher keinen Kreuzungspunkt der Signale 108 und 110, mit dem nach dem oben erläuterten Verfahren eine Bestimmung des Quotienten $\Delta v/\Delta T$ erfolgt. In diesem Fall wird beispielsgemäß geprüft, ob sich die Radgeschwindigkeit 108 innerhalb eines gewissen Zeitintervalls $\Delta T_{sd}$ in der Nähe der Fahrzeugreferenzgeschwindigkeit 110 aufhält, d.h. z.B. die Differenz der beiden Signale 108, 110 für einen ausreichend langen Zeitraum von z.B. ca. 50ms gering ist (beispielsweise kleiner 3km/h). Dann wird nach Ablauf des Zeitintervalls $\Delta T_{sd}$, also zum Zeitpunkt 114, der Arbeitspunkt 112 als aktuelle Fahrzeugreferenzgeschwindigkeit definiert. Aus dem Zeitpunkt 113 der erkannten Radinstabilität (Arbeitspunkt 111) und dem Zeitpunkt 114 wird dann eine Quotientenberechnung nach $\Delta v/\Delta T$ möglich, und es kann ein VREF-Limitierungsgradient ermittelt werden.

Der Verlauf der Fahrzeugreferenzgeschwindigkeit hängt von der Filterung der Radgeschwindigkeit ab. Damit können aber auch die Schnittpunkte zwischen der Fahrzeugreferenzgeschwindigkeit VREF und der Radgeschwindigkeit beispielsgemäß mit der Filterung variieren, was wiederum zu unterschiedlichen Ergebnissen in der Ermittlung der Arbeitspunkte für die Bestimmung des Quotienten $\Delta v/\Delta T$ führt.

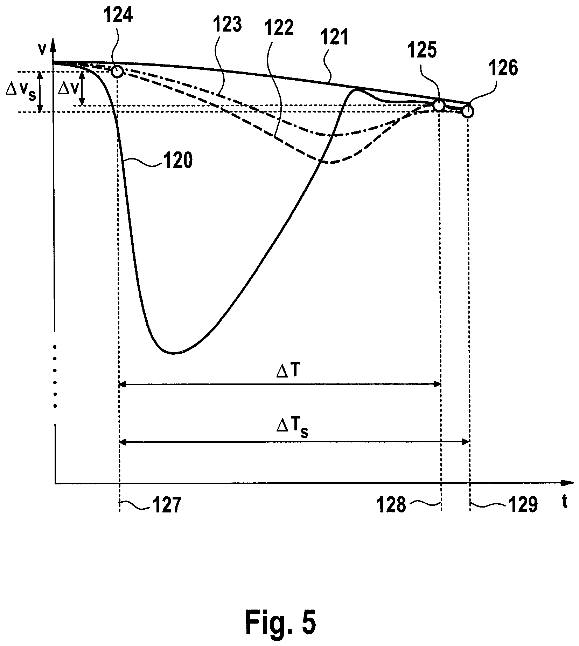

Zur Verdeutlichung dieses Zusammenhangs ist in Fig. 5 ein vergleichendes Beispiel für zwei unterschiedliche Filterkonstanten dargestellt. Das Signal 120 stellt die Radgeschwindigkeit dar, aus der durch Filterung und Gradientenbeschränkung beispielsgemäß eine Fahrzeugreferenzgeschwindigkeit gebildet wird. Signal 122 zeigt die Fahrzeugreferenzgeschwindigkeit für eine schwächere Filterung, Signal 123 die Fahrzeugreferenzgeschwindigkeit für den Fall einer stärkeren Filterung. Signal 121 gibt die tatsächliche Fahrzeuggeschwindigkeit wieder.

Die Fahrzeugreferenzgeschwindigkeit bei der schwächeren Filterung (122) folgt schneller der Radgeschwindigkeit 120 als dies bei der stärkeren Filterung (123) der Fall ist. Da dies jedoch in beiden Richtungen der Fall ist, also sowohl bei der Entfernung von als auch bei der Annäherung an die Fahrzeuggeschwindigkeit 121, stellen sich dennoch nahezu gleiche Ergebnisse bei der Quotientenbestimmung $\Delta v/\Delta T$ ein. Im Falle der schwächeren Filterung ergibt sich ein früherer Schnittpunkt 125 der Signale bereits zum Zeitpunkt 128, im Falle der stärkeren Filterung ergibt sich der Schnittpunkt 126 erst zum späteren Zeitpunkt 129. Das etwas verlängerte Zeitintervall $\Delta T_s$ bei der stärkeren Filterung wird aber in der Regel durch eine ebenfalls etwas vergrößerte Geschwindigkeitsdifferenz $\Delta v_s$ kompensiert.

Es hat sich gezeigt, dass die Filterkonstante in einem großen Bereich variiert werden kann, ohne dass die Ergebnisse stark differieren. Wählt man allerdings die Filterkonstante zu groß, so folgt die Fahrzeugreferenzgeschwindigkeit in Situationen mit schwankenden Reibwerten teilweise nur schlecht der tatsächlichen Fahrzeuggeschwindigkeit.

Daher wird vorteilhafterweise als Grenze für die Filterzeitkonstante ein Wert von 100ms nicht überschritten.

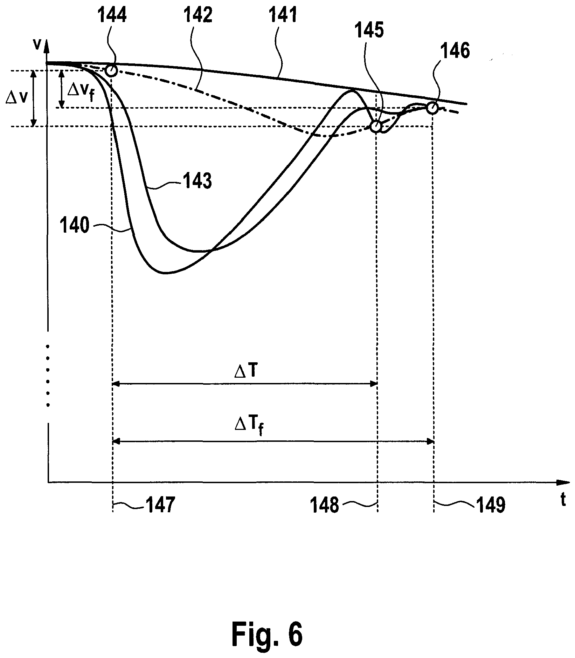

In Fig. 6 sind schematisch beispielsgemäße Signalverläufe dargestellt, anhand derer aufgezeigt werden soll, welche Schwierigkeiten auftreten können, wenn für das beispielsgemäße Verfahren die ungefilterte Radgeschwindigkeit der Vorderrades VR verwendet wird. Das zeitliche Verhalten der Radgeschwindigkeit des Vorderrades VR wird dabei durch den Verlauf 140 dargestellt, Verlauf 141 gibt die Fahrzeuggeschwindigkeit an und Linie 142 gibt die geschätzte Fahrzeugreferenzgeschwindigkeit VREF wieder.

Augrund von Schwingungen in der Radgeschwindigkeit 140 nach der Ausregelung der Blockierneigung kommt es zu einem Kreuzungspunkt 145 zwischen der Fahrzeugreferenzgeschwindigkeit 142 und der Radgeschwindigkeit 140 zu einem relativ frühen Zeitpunkt 148 auf recht niedrigem Geschwindigkeitsniveau. Wie das Beispiel zeigt, ist die Lage des Kreuzungspunkts 145 etwas willkürlich durch die starken Schwingungen in der Radgeschwindigkeit 140 bedingt. Derartige Schwingungen können während der ABS-Regelung aber sehr leicht auftreten. Um die Ergebnisse der Gradientenlimitierung der Fahrzeugreferenzgeschwindigkeit reproduzierbarer zu machen, wird beispielsgemäß vorgeschlagen, dass nicht die tatsächliche Radgeschwindigkeit 140 sondern eine schwach gefilterte Radgeschwindigkeit 143 verwendet wird. Die verwendete Filterzeitkonstante liegt hierbei deutlich unter der Filterzeitkonstanten für die Fahrzeugreferenzgeschwindigkeits-Berechnung, also z.B. bei etwa 30 bis 40ms.

Wie der Fig. 6 zu entnehmen ist, führt die schwach gefilterte Radgeschwindigkeit 143 zu einem Kreuzungspunkt 146, welcher zu einem späteren Zeitpunkt 149 und auf einem höheren Geschwindigkeitsniveau liegt. Der heraus bestimmte Quotient $\Delta v_f/\Delta T_f$ führt zu einem wesentlich besseren Ergebnis für die Gradientenlimitierung der Fahrzeugreferenzgeschwindigkeit als der zu große Quotient $\Delta v/\Delta T$ aus dem Kreuzungspunkt 145.

Es hat sich gezeigt, dass durch die Maßnahme der schwachen Filterung der Radgeschwindigkeit die Wahrscheinlichkeit für eine fehlerhafte Berechnung der Fahrzeugverzögerung während einer Instabilitätsphase des blockierschutzgeregelten Rades VR deutlich gesenkt wird.

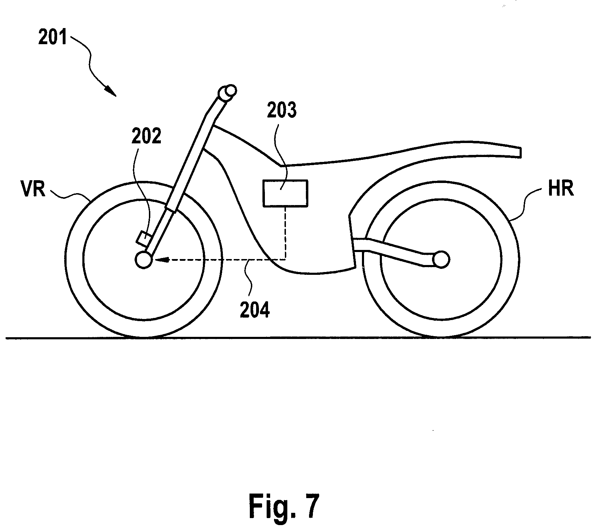

Beispielsgemäß wird das Verfahren zur Bestimmung einer Fahrzeugreferenzgeschwindigkeit in ABS-Systemen für Krafträder durchgeführt, bei denen (z.B. aus Kostengründen) nur ein Rad blockierschutzgeregelt wird und daher auch nur ein Radgeschwindigkeitssensor vorhanden ist. Fig. 7 zeigt in stark vereinfachter Darstellung ein beispielhaftes Motorrad, in welchem ein erfindungsgemäßes Verfahren vorteilhafterweise durchgeführt wird. An dem Vorderrad VR des Motorrades 201 ist ein Raddrehzahlsensor 202 angeordnet, während die Raddrehgeschwindigkeit des Hinterrades HR nicht gemessen wird. Motorrad 201 umfasst eine Bremsanlage mit einem Antiblockiersystem, welche hier rein schematisch durch ein Bremssteuergerät 203 dargestellt ist. Die Bremsanlage ist derart ausgelegt, dass nur an dem Vorderrad VR eine ABS-Schlupfregelung durchführbar ist. Dies ist in Fig. 7 anhand des gestrichelten Pfeils 204 zwischen Bremssteuergerät 203 und Vorderrad VR schematisch dargestellt.

Es ist aber auch vorteilhaft, das Verfahren in dezentralen Bremsregelsystemen einzusetzen, in denen nur die Radgeschwindigkeitsinformation eines Rades in einer lokalen (radindividuellen) Bremsregeleinheit vorliegt. Dies ist beispielsweise in einem zumindest teilweise elektromechanischen Bremssystem eines PKWs denkbar, das an mindestens zwei Rädern, insbesondere an jedem Rad des Fahrzeugs, über eine separate Bremsregeleinheit (WCU: Wheel Control Unit) verfügt.

Um eine übergeordnete Fahrdynamik- und Radschlupfregelung durchzuführen, wird beispielsgemäß eine zentrale Bremsregeleinheit (ECU: Electronic Control Unit) eingesetzt, welche über alle Radgeschwindigkeitsinformationen verfügt. Diese zentrale Bremsregeleinheit ECU überträgt im Nicht-Fehlerfall vorzugsweise über ein Bussystem Druck- bzw. Bremskraftanforderungen an die Regeleinheiten WCU der einzelnen Radbremsen, sodass diese lokalen Regeleinheiten im normalen Betriebsfall keine separate ABS-Regelung ausführen. Sollte aber die zentrale Regeleinheit (ECU) oder das Bussystem zur Datenübertragung ausfallen, so kann die Regeeinheit (WCU) jeder Radbremse in einer Fehler-Rückfallebene eine lokale Regelung vornehmen, wenn sie über das Geschwindigkeitssignal des ihr zugeordneten Rades verfügt. In dieser Rückfallebene wird dann an jeder Radbremse eine lokale ABS-Regelung durchgeführt. Die dazu notwendige Fahrzeugreferenzgeschwindigkeit wird dann auf der Basis der einzelnen Radgeschwindigkeit des entsprechenden Rades in der lokalen Regeleinheit (WCU) bestimmt.

Beispielsgemäß wird das Verfahren vorteilhafterweise auch in Krafträdern durchgeführt, welche mit grobstolligen Reifen ausgerüstet sind und vorwiegend unter Offroad-Bedingungen betrieben werden. Hier kann eine radindividuelle Referenz-Geschwindigkeit berechnet werden, um Unterbremsungszustände zu vermeiden, auch wenn das Kraftrad über eine 2-Kanal-Regelung und über zwei individuelle Radgeschwindigkeitssensoren verfügt. In den genannten Krafträdern kann das Problem der Unterbremsung vor allem dadurch auftreten, dass bei einer Bremsung eines einzelnen Rades das ungebremste Rad eine zu hohe Fahrzeugreferenzgeschwindigkeit herbeiführt und das ABS-geregelte andere Rad dadurch auf einem zu geringen Schlupfniveau geregt wird. Es ist daher vorteilhaft, eine individuelle Fahrzeugreferenzgeschwindigkeit für das geregelte Rad zu bestimmen, die sich an dem Einschwing-Schlupfniveau des geregelten Rades nach der jeweiligen Ausregelung einer Blockierneigung orientiert. Zur Absicherung kann beispielsgemäß gefordert werden, dass diese individuelle Fahrzeugreferenzgeschwindigkeit nur um einen vorgegebenen Betrag unter der globalen Fahrzeugreferenzgeschwindigkeit liegen darf, wobei die globale Fahrzeugreferenzgeschwindigkeit aus beiden Radgeschwindigkeiten bestimmt wird und sich maßgeblich an der Radgeschwindigkeit des ungebremsten Rades orientieren wird.

Beispielsgemäß wird das Verfahren zur Bestimmung einer Fahrzeugreferenzgeschwindigkeit VREF in einem Antiblockiersystem mit nur einem geregelten Radkreis und nur einem Sensor zur Erfassung der Geschwindigkeit dieses einen geregelten Rades durchgeführt. In den Instabilitätsphasen des geregelten Rades, in denen das Rad durch Druckabbau und Druckhalten wieder an die Fahrzeuggeschwindigkeit heranbeschleunigt wird, wird eine mittlere Fahrzeugverzögerung $a_{Fzg}$ bestimmt, indem ein erstes Signal durch starke Tiefpassfilterung der Radgeschwindigkeit des betrachteten Rades und zusätzliche Gradientenlimitierung auf maximal 1g und ein zweites Signal durch schwache Tiefpassfilterung der Radgeschwindigkeit ohne Gradientenlimitierung gebildet wird. Der Kreuzungspunkt dieser beiden Signale nach Ausregelung der Instabilität des Rades wird dazu benutzt, gemeinsam mit dem Geschwindigkeitswert des ersten Signals zum Zeitpunkt der Erkennung der vorherigen Radinstabilität sowie diesem Zeitpunkt selbst, einen Gradienten $a_{Fzg} = \Delta v/\Delta T$ (mit $\Delta v$ = Geschwindigkeitsdifferenz der beiden Geschwindigkeiten und $\Delta T$ = Differenz der beiden Zeitpunkte) zu bilden. Diese mittlere Fahrzeugverzögerung $a_{Fzg}$ wird dann dazu herangezogen, den negativen Gradienten der Fahrzeugreferenzgeschwindigkeit VREF auf ein erwartetes Verzögerungsmaß zu begrenzen, wobei als Fahrzeugreferenzgeschwindigkeit VREF selbst das erste (stark gefilterte und gradientenlimitierte) Signal verwendet wird.

Die mittlere Fahrzeugverzögerung $a_{Fzg}$, die zur Gradientenbegrenzung der Fahrzeugreferenzgeschwindigkeit VREF herangezogen wird, wird beispielsgemäß in jeder Instabilitätsphase des Rades nach dem genannten Verfahren neu bestimmt. Beispielsgemäß wird die mittlere Fahrzeugverzögerung $a_{Fzg}$, welche zur Gradientenbegrenzung der Fahrzeugreferenzgeschwindigkeit VREF verwendet wird, bei jedem von der ABS-Regelung in den Stabilphasen des Rades aufgebrachten Druckaufbaupuls um einen Wert erhöht, der proportional zur Größe des Druckaufbaupulses gewählt wird.

Wenn es sich bei dem geregelten Rad um das Vorderrad eines Kraftrads handelt, wird die mittlere Fahrzeugverzögerung $a_{Fzg}$, die zur Gradientenbegrenzung der Fahrzeugreferenzgeschwindigkeit VREF verwendet wird, beispielsgemäß um einen geeigneten Betrag erhöht, wenn über einen Schalter (z.B. Bremslichtschalter o.ä.) erkannt wird, dass der Fahrer des Kraftrads zusätzlich eine Betätigung des Hinterrad-Bremskreis startet, während die ABS-Regelung des Vorderrades bereits läuft.

Gemäß einem anderen Ausführungsbeispiel wird das Verfahren auch in Krafträdern mit 2-Kanal-ABS durchgeführt, welche über zwei Radgeschwindigkeitssensoren verfügen. Hier wird für jedes gebremste und ABS-geregelte Rad eine individuelle Fahrzeugreferenzgeschwindigkeit VREF bestimmt, um das jeweilige Rad - speziell unter extremen Bedingungen (wie Offroad-Fahrbahnen oder bei Verwendung sehr grobstolliger Reifen) - auf dem individuell als optimal ermittelten Schlupfniveau zu regeln.

Ein erfindungsgemäßes Verfahren wird aber beispielsgemäß auch in beliebigen Kraftfahrzeugen mit lokalen Bremsenreglern in komplexen By-Wire-Bremsanlagen durchgeführt, z.B. mit elektromechanischen Bremsen. Derartige Bremssysteme verfügen über einen ABS-Zentralregler, welcher im Normalbetrieb Druckanforderungen über ein Bussystem an die lokalen radindividuellen Bremsenregler schickt. Im Falle eines Ausfalls des Zentralreglers oder des Bussystems führen in einem Rückfallmodus die lokalen Regler eine eigenständige ABS-Regelung nur anhand der Geschwindigkeit des ihnen zugeordneten Rades durch, wobei die Bestimmung der radindividuellen Fahrzeugreferenzgeschwindigkeit VREF anhand eines beispielgemäßen Verfahrens durchgeführt wird.

Beispielsgemäß wird die Antiblockierregelung in einem digitalen Antiblockierregler durchgeführt, d.h. der Regler arbeitet zeitdiskret und verarbeitet die entsprechenden Größen in festen, gleichmäßigen Zeitabständen T (Regelungs-Loopzeit). Für eine Erkennung des zweiten Arbeitspunktes 8, 10, 48, 104 ist es meist nicht gegeben, dass die zwei digitalen Signale des ersten und zweiten Radgeschwindigkeitssignals während einer Regelungsloop n exakt gleich sind, auch wenn sie sich analog betrachtet überschneiden.

Ein Schnittpunkt des ersten Radgeschwindigkeitssignals (Fahrzeugreferenzgeschwindigkeit $v_{filt\_graclim\_n}$ bzw. $VREF_n$) und des zweiten Radgeschwindigkeitssignals (Radgeschwindigkeit bzw. schwach gefilterte Radgeschwindigkeit $v_n$) gilt daher beispielsgemäß in einer Loop n dann als erkannt, wenn die beiden Signale in Loop n gleich sind:

$$(1) \quad VREF_n = v_n,$$

oder wenn seit der vorherigen Loop n-1 das zweite Radgeschwindigkeitssignal das erste Radgeschwindigkeitssignal unterschreitet oder erreicht:

$$(2) \quad v_{n-1} > VREF_{n-1} \quad und \quad v_n \leq VREF_n,$$

oder wenn seit der vorherigen Loop n-1 das zweite Radgeschwindigkeitssignal das erste Radgeschwindigkeitssignal

überschreitet oder erreicht:

$$(3) \quad v_{n-1} < VREF_{n-1} \quad und \quad v_n \geq VREF_n.$$

Entsprechend kann der erste Schnittpunkt bei z.B. Zeitpunkt 25, bei welchem das zweite Radgeschwindigkeitssignal das erste Radgeschwindigkeitssignal "überschreitend schneidet", anhand obiger Beziehung (3) erkannt werden. Der zweite Schnittpunkt bei z.B. Zeitpunkt 26, d.h. der zweite Arbeitspunkt 8, bei welchem das zweite Radgeschwindigkeitssignal das erste Radgeschwindigkeitssignal "unterschreitend schneidet" oder erreicht, kann anhand obiger Beziehung (2) erkannt werden.

**Patentansprüche**

1. Verfahren zur Bestimmung einer Fahrzeugreferenzgeschwindigkeit (VREF) in einer Bremsanlage eines Kraftfahrzeugs (201), insbesondere motorisierten Einspurfahrzeugs, mit einem Antiblockierregelsystem (203), wobei an einem Rad (VR) des Kraftfahrzeugs eine Schlupfregelung (204) in Abhängigkeit der Fahrzeugreferenzgeschwindigkeit (VREF) durchführbar ist und ein Sensor (202) zur Messung der Radgeschwindigkeit (v) an diesem schlupfregelbaren Rad (VR) angeordnet ist, wobei ein erstes Radgeschwindigkeitssignal ($v_{filt\_gradlim}$) durch eine Tiefpassfilterung der gemessenen Radgeschwindigkeit (v) gebildet wird, wobei die negative Steigung des ersten Radgeschwindigkeitssignals ($v_{filt\_gradlim}$) auf einen vorbestimmten Gradientengrenzwert ($\Delta v_{max\_n}/T$) begrenzt wird, **dadurch gekennzeichnet, dass** das erste Radgeschwindigkeitssignal ($V_{filt\_gradlim}$) als radindividuelle Fahrzeugreferenzgeschwindigkeit (VREF, 3, 42, 62, 102, 110, 122, 123, 142) zur Schlupfregelung des Rades (VR) herangezogen wird.

2. Verfahren nach Anspruch 1, **dadurch gekennzeichnet, dass** ein zweites Radgeschwindigkeitssignal (1, 40, 60, 100, 108, 120, 140, 143) gebildet wird, welches mit dem ersten Radgeschwindigkeitssignal ($v_{filt\_gradlim}$, VREF, 3, 42, 62, 102, 110, 122, 123, 142) verglichen wird, um einen Verzögerungswert ($a_{Fzg}$) zu bestimmen, und dass der Gradientengrenzwert ($\Delta v_{max\_n}/T$) in Abhängigkeit des bestimmten Verzögerungswerts ($a_{Fzg}$) angepasst wird, insbesondere dass der Gradientengrenzwert ($\Delta v_{max\_n}/T$) gleich dem bestimmten Verzögerungswert ($a_{Fzg}$) gewählt wird.

3. Verfahren nach Anspruch 2, **dadurch gekennzeichnet, dass** das zweite Radgeschwindigkeitssignal (1, 40, 60, 100, 108, 120, 140, 143) nur anhand der gemessenen Radgeschwindigkeit (v) des Rades gebildet wird.

4. Verfahren nach Anspruch 2 oder 3, **dadurch gekennzeichnet, dass** das zweite Radgeschwindigkeitssignal (1, 40, 60, 100, 108, 120, 140) dem ungefilterten Signal der gemessenen Radgeschwindigkeit (v) entspricht oder dass das zweite Radgeschwindigkeitssignal (143) durch eine Tiefpassfilterung der gemessenen Radgeschwindigkeit (v) mit einer Filterkonstanten, welche kleiner als die Filterkonstante der Tiefpassfilterung des ersten Radgeschwindigkeitssignals ($V_{filt\_gradlim}$) ist, gebildet wird.

5. Verfahren nach einem der Ansprüche 2 bis 4, **dadurch gekennzeichnet, dass** der Verzögerungswert ($a_{Fzg}$) aus einer Zeitdauer ($\Delta T$) und einer zugehörigen Geschwindigkeitsdifferenz ($\Delta v$) des ersten Radgeschwindigkeitssignals ($v_{filt\_gradlim}$, VREF, 3, 42, 62, 102, 110, 122, 123, 142) bestimmt wird.

6. Verfahren nach Anspruch 5, **dadurch gekennzeichnet, dass** die Zeitdauer ($\Delta T$) durch den zeitlichen Abstand zwischen einem ersten (7, 9, 47, 103, 111) und einem zweiten (8, 10, 48, 104, 112) Arbeitspunkt und die Geschwindigkeitsdifferenz ($\Delta v$) als die Geschwindigkeitsänderung des ersten Radgeschwindigkeitssignals (3, 42, 102, 110) zwischen erstem und zweitem Arbeitspunkt bestimmt wird, wobei der erste Arbeitspunkt (7, 9, 47, 103, 111) erkannt wird, wenn eine Radinstabilität des Rades (VR) erkannt wird, insbesondere wenn der Schlupf des Rades (VR) eine Schlupfschwelle überschreitet oder wenn ein Druckabbau an dem Rad (VR) durch die Antiblockierregelung durchgeführt wird.

7. Verfahren nach Anspruch 6, **dadurch gekennzeichnet, dass** der zugehörige zweite Arbeitspunkt (8, 10, 48, 104) erkannt wird, wenn das zweite Radgeschwindigkeitssignal (1, 40, 100) abfällt und das zweite Radgeschwindigkeitssignal das erste Radgeschwindigkeitssignal (3, 42, 102) schneidet.

8. Verfahren nach Anspruch 6, **dadurch gekennzeichnet, dass** der zugehörige zweite Arbeitspunkt (112) erkannt wird, wenn das erste (110) und das zweite (108) Radgeschwindigkeitssignal sich für eine vorgegebene Zeitdauer ($\Delta T_{sd}$) maximal um einen vorgegebenen Betrag unterscheiden.

9. Verfahren nach mindestens einem der Ansprüche 1 bis 8, **dadurch gekennzeichnet, dass** während einer Druckaufbauphase der Antiblockierregelung des Rades (VR) der Gradientengrenzwert ($\Delta v_{max\_n}/T$) um einen Betrag ($\Delta a_{FZg}$) erhöht wird, der proportional zu der Druckerhöhung ($\Delta P$) an dem Rad (VR) in der Druckaufbauphase ist.

10. Verfahren nach mindestens einem der Ansprüche 1 bis 9, **dadurch gekennzeichnet, dass** dieses in einer Bremsanlage eines motorisierten Einspurfahrzeugs durchgeführt wird, und dass der Gradientengrenzwert ($\Delta v_{max\_n}/T$) zur Begrenzung des ersten Radgeschwindigkeitssignals des schlupfgeregelten Rades (VR) in Abhängigkeit eines Signals (HR-BLS) eines Bremslichtschalters für ein anderes Rad (HR) als das schlupfgeregelte Rad (VR), insbesondere das Hinterrad (HR), angepasst wird, insbesondere um einen vorgegebenen prozentualen Betrag erhöht oder erniedrigt wird.

11. Bremsanlage eines Kraftfahrzeugs (201), insbesondere motorisierten Einspurfahrzeugs, mit einem Antiblockierregelsystem, welche ein Bremssteuergerät (203) zur Schlupfregelung (204) eines Rades (VR) des Kraftfahrzeugs und einen Sensor (202) zur Messung der Radgeschwindigkeit (v) dieses schlupfregelbaren Rades (VR) umfasst, wobei in dem Bremssteuergerät (203) eine Fahrzeugreferenzgeschwindigkeit (VREF) zur Schlupfregelung dieses Rades (VR) bestimmt wird, **dadurch gekennzeichnet, dass** in dem Bremssteuergerät (203) ein Verfahren zur Bestimmung einer radindividuellen Fahrzeugreferenzgeschwindigkeit (VREF) gemäß mindestens einem der Ansprüche 1 bis 10 durchgeführt wird.

12. Bremsanlage eines Einspurfahrzeugs (201) nach Anspruch 11, **dadurch gekennzeichnet, dass** diese derart ausgelegt ist, dass nur an einem der beiden Räder (VR), insbesondere dem Vorderrad, eine Schlupfregelung durchführbar ist, und dass diese nur an dem schlupfregelbaren Rad (VR) einen Sensor (202) zur Messung der Radgeschwindigkeit (v) umfasst.

13. Bremsanlage eines Einspurfahrzeugs (201) nach Anspruch 11, **dadurch gekennzeichnet, dass** diese derart ausgelegt ist, dass an beiden Rädern (VR, HR) eine Schlupfregelung durchführbar ist, wobei an beiden Rädern jeweils ein Sensor (202) zur Messung der Radgeschwindigkeit (v) angeordnet ist, dass in dem Bremssteuergerät (203) für jedes der beiden Räder (VR, HR), insbesondere in vorgegebenen Situationen, eine radindividuelle Fahrzeugreferenzgeschwindigkeit (VREF) bestimmt wird, und dass das Bremssteuergerät (203) an jedem der beiden Räder (VR, HR) in Abhängigkeit der jeweiligen radindividuellen Fahrzeugreferenzgeschwindigkeit (VREF) eine Schlupfregelung durchführt.

14. Bremsanlage eines Kraftfahrzeugs, insbesondere mit elektromechanischen Bremsen, nach Anspruch 11, **gekennzeichnet durch** ein zentrales Bremssteuergerät zur Schlupfregelung aller Räder des Kraftfahrzeugs in Abhängigkeit einer globalen Fahrzeugreferenzgeschwindigkeit, welche insbesondere anhand der Radgeschwindigkeiten aller Räder bestimmt wird, und radindividuelle Bremssteuergeräte, welche jeweils einem Rad zugeordnet sind, wobei in einem Fehlerfall der Bremsanlage jedes der radindividuellen Bremssteuergeräte für das ihm zugeordnete Rad eine radindividuelle Fahrzeugreferenzgeschwindigkeit (VREF) bestimmt und eine Schlupfregelung des ihm zugeordneten Rades in Abhängigkeit der radindividuellen Fahrzeugreferenzgeschwindigkeit (VREF) durchführt.

## Claims

1. Method for determining a vehicle reference speed (VREF) in a brake system of a motor vehicle (201), in particular a motorized single-track vehicle, with an anti-lock control system (203), wherein slip control (204) can be carried out at one wheel (VR) of the motor vehicle depending on the vehicle reference speed (VREF) and a sensor (202) for measuring the wheel speed (v) is arranged on this slip-controllable wheel (VR), wherein a first wheel speed signal ($v_{filt\_gradlim}$) is formed by low-pass filtering of the measured wheel speed (v), wherein the negative gradient of the first wheel speed signal ($v_{filt\_gradlim}$) is limited to a predetermined gradient limit value ($\Delta v_{max\_n}/T$), **characterized in that** the first wheel speed signal ($v_{filt\_gradlim}$) is used as a wheel-specific vehicle reference speed (VREF, 3, 42, 62, 102, 110, 122, 123, 142) for slip control of the wheel (VR).

2. Method according to Claim 1, **characterized in that** a second wheel speed signal (1, 40, 60, 100, 108, 120, 140, 143) is formed, which is compared with the first wheel speed signal ($v_{filt\_gradlim}$, VREF, 3, 42, 62, 102, 110, 122, 123, 142) in order to determine the deceleration value ($a_{FZg}$), and that the gradient limiting value ($\Delta v_{max\_n}/T$) is adapted depending on the determined deceleration value ($a_{Fzg}$), in particular that the gradient limit value ($\Delta v_{max\_n}/T$) is selected to be equal to the determined deceleration value ($a_{Fzg}$).

3. Method according to Claim 2, **characterized in that** the second wheel speed signal (1, 40, 60, 100, 108, 120, 140, 143) is formed only on the basis of the measured speed (v) of the wheel.

4. Method according to Claim 2, **characterized in that** the second wheel speed signal (1, 40, 60, 100, 108, 120, 140) corresponds to the unfiltered signal of the measured wheel speed (v) or that the second wheel speed signal (143) is formed by low-pass filtering of the measured wheel speed (v) with a filter constant, which is smaller than the filter constant of the low-pass filtering of the first wheel speed signal ($v_{filt\_gradlim}$).

5. Method according to Claim 2 or 4, **characterized in that** the deceleration value ($a_{Fzg}$) is determined from a period ($\Delta T$) and an associated speed difference ($\Delta v$) of the first wheel speed signal ($v_{filt\_gradlim}$, VREF, 3, 42, 62, 102, 110, 122, 123, 142).

6. Method according to Claim 5, **characterized in that** the time period ($\Delta T$) is determined by the time interval between a first (7, 9, 47, 103, 111) and a second (8, 10, 48, 104, 112) operating point and the speed difference ($\Delta v$) is determined as the speed change of the first wheel speed signal (3, 42, 102, 110) between first and second operating points, wherein the first operating point (7, 9, 47, 103, 111) is identified if a wheel instability of the wheel (VR) is identified, in particular if the slip of the wheel (VR) exceeds a slip threshold or if a pressure decrease at the wheel (VR) is carried out by the anti-lock control.

7. Method according to Claim 6, **characterized in that** the associated second operating point (8, 10, 48, 104) is identified if the second wheel speed signal (1, 40, 100) decreases and the second wheel speed signal intersects the first wheel speed signal (3, 42, 102).

8. Method according to Claim 6, **characterized in that** the associated second operating point (112) is identified if the first (110) and the second (108) wheel speed signals differ by no more than a predetermined amount for a predetermined time period ($\Delta T_{sd}$).

9. Method according to at least one of Claims 1 to 8, **characterized in that** during a pressure build-up phase of the anti-lock control of the wheel (VR) the gradient limit value ($\Delta v_{max\_n}/T$) is increased by an amount ($\Delta a_{Fzg}$), which is proportional to the pressure increase ($\Delta P$) at the wheel (VR) in the pressure build-up phase.

10. Method according to at least one of Claims 1 to 9, **characterized in that** it is implemented in a brake system of a motorized single-track vehicle, and that the gradient limit value ($\Delta v_{max\_n}/T$) for limiting the first wheel speed signal of the slip-controlled wheel (VR) is adapted depending on a signal (HR-BLS) of a brake light switch for a different wheel (HR) than the slip-controlled wheel (VR), in particular the rear wheel (HR), in particular being increased or reduced by a predetermined percentage amount.

11. Brake system of a motor vehicle (201), in particular a motorized single-track vehicle, with an anti-lock control system, which comprises a brake controller (203) for slip control (204) of a wheel (VR) of the motor vehicle and a sensor (202) for measuring the wheel speed (v) of this slip-regulated wheel (VR), wherein a vehicle reference speed (VREF) for slip control of this wheel (VR) is determined in the brake controller (203), **characterized in that** a method for determining a wheel-specific vehicle reference speed (VREF) is implemented in the brake controller (203) according to at least one of Claims 1 to 10.

12. Brake system of a single-track vehicle (201) according to Claim 11, **characterized in that** it is designed so that slip control is only implemented on one of the two wheels (VR), in particular the front wheel, and that this only comprises a sensor (202) for measuring the wheel speed (v) on the slip-controllable wheel (VR).

13. Brake system of a single-track vehicle (201) according to Claim 11, **characterized in that** it is designed so that slip control can be implemented on both wheels (VR, HR), wherein a sensor (202) for measuring the wheel speed (v) is arranged on each of the two wheels, that a wheel-specific vehicle reference speed (VREF) is determined in the brake controller (203) for each of the two wheels (VR, HR), in particular in predetermined situations, and that the brake controller (203) carries out slip control on each of the two wheels (VR, HR) depending on the respective wheel-specific vehicle reference speed (VREF).

14. Brake system of a motor vehicle, in particular with electromechanical brakes, according to Claim 11, **characterized by** a central brake controller for slip control of all wheels of the motor vehicle depending on a global vehicle reference speed, which is especially determined using the wheel speeds of all wheels, and wheel-specific brake controllers, each being associated with a wheel, wherein in a failure case of the brake system each of the wheel-specific brake controllers determines a wheel-specific vehicle reference speed (VREF) for its associated wheel and implements slip control of its associated wheel depending on the wheel-specific vehicle reference speed (VREF).

**Revendications**

1. Procédé de détermination d'une vitesse de référence de véhicule (VREF) dans un système de freinage d'un véhicule automobile (201), notamment d'un véhicule à voie unique motorisé, avec un système de régulation de l'antiblocage (203), une régulation du patinage (204) pouvant être réalisée au niveau d'une roue (VR) du véhicule automobile en fonction de la vitesse de référence de véhicule (VREF) et un capteur (202) de mesure de la vitesse de roue (v) étant disposé au niveau de cette roue (VR) à régulation de patinage, un premier signal de vitesse de roue ($V_{filt\_gradlim}$) étant formé par un filtrage passe-bas de la vitesse de roue (v) mesurée, la pente négative du premier signal de vitesse de roue ($V_{filt\_gradlim}$) étant limitée à une valeur limite de gradient ($\Delta v_{max\_n/T}$) prédéterminée, **caractérisé en ce que** le premier signal de vitesse de roue ($V_{filt\_gradlim}$) est utilisé comme vitesse de référence de véhicule (VREF, 3, 42, 62, 102, 110, 122, 123, 142) individuelle à chaque roue pour la régulation du patinage de la roue (VR).

2. Procédé selon la revendication 1, **caractérisé en ce qu'**un deuxième signal de vitesse de roue (1, 40, 60, 100, 108, 120, 140, 143) est formé, celui-ci étant comparé au premier signal de vitesse de roue ($V_{filt\_gradlim}$, VREF, 3, 42, 62, 102, 110, 122, 123, 142) pour déterminer une valeur de décélération ($a_{Fzg}$) et que la valeur limite de gradient ($\Delta v_{max\_n/T}$) est adaptée en fonction de la valeur de décélération ($a_{Fzg}$) déterminée, notamment que la valeur limite de gradient ($\Delta v_{max\_n/T}$) est sélectionnée pour égaler la valeur de décélération ($a_{Fzg}$) déterminée.

3. Procédé selon la revendication 2, **caractérisé en ce que** le deuxième signal de vitesse de roue (1, 40, 60, 100, 108, 120, 140, 143) n'est formé qu'à l'aide de la vitesse de roue (v) mesurée de la roue.

4. Procédé selon la revendication 2 ou 3, **caractérisé en ce que** le deuxième signal de vitesse de roue (1, 40, 60, 100, 108, 120, 140) correspond au signal non filtré de la vitesse de roue (v) mesurée ou que le deuxième signal de vitesse de roue (143) est formé par un filtrage passe-bas de la vitesse de roue (v) mesurée avec une constante de filtre inférieure à la constante de filtre du filtrage passe-bas du premier signal de vitesse de roue ($V_{filt\_gradlim}$).

5. Procédé selon l'une quelconque des revendications 2 à 4, **caractérisé en ce que** la valeur de décélération ($a_{Fzg}$) est déterminée à partir d'une durée ($\Delta T$) et d'une différence de vitesse ($\Delta v$) associée du premier signal de vitesse de roue ($V_{filt\_gradlim}$, VREF, 3, 42, 62, 102, 110, 122, 123, 142).

6. Procédé selon la revendication 5, **caractérisé en ce que** la durée ($\Delta T$) est déterminée par l'écart temporel entre un premier (7, 9, 47, 103, 111) et un deuxième (8, 10, 48, 104, 112) point de travail et la différence de vitesse ($\Delta v$) est définie comme la variation de vitesse du premier signal de vitesse de roue (3, 42, 102, 110) entre le premier et le deuxième point de travail, le premier point de travail (7, 9, 47, 103, 111) étant identifié lorsqu'une instabilité de roue de la roue (VR) est identifiée, notamment lorsque le patinage de la roue (VR) dépasse un seuil de patinage ou lorsqu'une décompression est réalisée au niveau de la roue (VR) par régulation de l'antiblocage.

7. Procédé selon la revendication 6, **caractérisé en ce que** le deuxième point de travail (8, 10, 48, 104) associé est identifié lorsque le deuxième signal de vitesse de roue (1, 40, 100) décline et que le deuxième signal de vitesse de roue croise le premier signal de vitesse de roue (3, 42, 102).

8. Procédé selon la revendication 6, **caractérisé en ce que** le deuxième point de travail (112) associé est identifié lorsque le premier (110) et le deuxième (108) signal de vitesse de roue diffèrent au maximum d'une valeur prédéterminée pendant une durée ($\Delta T_{sd}$) prédéterminée.

9. Procédé selon au moins l'une quelconque des revendications 1 à 8, **caractérisé en ce que** pendant une phase de mise en pression de la régulation de l'antiblocage de la roue (VR), la valeur limite de gradient ($\Delta v_{max\_n/T}$) est augmentée d'une certaine valeur ($\Delta a_{Fzg}$) proportionnelle à l'augmentation de pression ($\Delta P$) au niveau de la roue (VR) lors de la phase de mise en pression.

**10.** Procédé selon au moins l'une quelconque des revendications 1 à 9, **caractérisé en ce que** celui-ci est mis en oeuvre dans un système de freinage d'un véhicule à voie unique motorisé et que la valeur limite de gradient ($\Delta v_{max\_n/T}$) servant à la délimitation du premier signal de vitesse de roue de la roue (VR) à régulation de patinage est adaptée en fonction d'un signal (HR-BLS) d'un contacteur de frein pour une autre roue (HR) que la roue (VR) à régulation de patinage, notamment la roue arrière (HR), et est notamment augmentée ou diminuée d'une valeur prédéfinie exprimée en pourcentage.

**11.** Système de freinage d'un véhicule automobile (201), notamment d'un véhicule à voie unique motorisé, avec un système de régulation de l'antiblocage comprenant un appareil de commande de frein (203) servant à la régulation du patinage (204) d'une roue (VR) du véhicule automobile et un capteur (202) servant à la mesure de la vitesse de roue (v) de cette roue (VR) à régulation de patinage, une vitesse de référence de véhicule (VREF) étant déterminée dans l'appareil de commande de frein (203) pour la régulation du patinage de cette roue (VR), **caractérisé en ce qu'**un procédé de détermination d'une vitesse de référence de véhicule (VREF) individuelle à chaque roue selon au moins l'une quelconque des revendications 1 à 10 est mis en oeuvre dans un appareil de commande de frein (203).

**12.** Système de freinage d'un véhicule à voie unique (201) selon la revendication 11, **caractérisé en ce que** celui-ci est conçu de telle sorte qu'une régulation du patinage puisse être réalisée seulement au niveau d'une des deux roues (VR), notamment la roue avant, et que celle-ci comprend un capteur (202) de mesure de la vitesse de roue (v) seulement au niveau de la roue (VR) à régulation de patinage.

**13.** Système de freinage d'un véhicule à voie unique (201) selon la revendication 11, **caractérisé en ce que** celui-ci est conçu de telle sorte qu'une régulation du patinage puisse être réalisée au niveau des deux roues (VR, HR), respectivement un capteur (202) étant disposé au niveau des deux roues pour la mesure de la vitesse de roue (v), qu'une vitesse de référence de véhicule (VREF) individuelle à chaque roue est déterminée dans l'appareil de commande de frein (203) pour chacune des deux roues (VR, HR), notamment dans des situations prédéterminées et que l'appareil de commande de frein (203) réalise une régulation du patinage au niveau de chacune des deux roues (VR, HR) en fonction de la vitesse de référence de véhicule (VREF) individuelle à chaque roue respective.

**14.** Système de freinage d'un véhicule automobile, notamment avec des freins électromécaniques, selon la revendication 11, **caractérisé par** un appareil de commande de frein central servant à la régulation du patinage de toutes les roues du véhicule automobile en fonction d'une vitesse de référence de véhicule globale notamment déterminée à l'aide des vitesses de roue de toutes les roues et des appareils de commande de freinage individuels à chaque roue respectivement associés à une roue, une vitesse de référence de véhicule (VREF) individuelle à chaque roue étant déterminée dans un cas d'anomalie du système de freinage de chacun des appareils de commande de freinage individuels à chaque roue pour la roue lui étant associé et une régulation du patinage de la roue lui étant associée étant réalisée en fonction de la vitesse de référence de véhicule (VREF) individuelle à chaque roue.

**Fig. 1**

EP 2 590 845 B1

Fig. 2

EP 2 590 845 B1

Fig. 3

**Fig. 4a**

**Fig. 4b**

EP 2 590 845 B1

**Fig. 5**

Fig. 6

**Fig. 7**

**EP 2 590 845 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3833212 A1
- EP 0548985 B1
- DE 4000212 A1